Europäisches Patentamt

(19) European Patent Office

Office européen des brevets

(11) Numéro de publication : **0 259 209 B1**

(12) ## FASCICULE DE BREVET EUROPEEN

(45) Date de publication du fascicule du brevet :
03.04.91 Bulletin 91/14

(51) Int. Cl.⁵ : **F16L 25/00**

(21) Numéro de dépôt : 87401842.7

(22) Date de dépôt : 07.08.87

(54) Dispositif pour la réalisation d'un raccordement étanche.

(30) Priorité : 11.08.86 FR 8611593

(43) Date de publication de la demande :
09.03.88 Bulletin 88/10

(45) Mention de la délivrance du brevet :
03.04.91 Bulletin 91/14

(84) Etats contractants désignés :
AT BE CH DE ES FR GB IT LI NL SE

(56) Documents cités :
FR-A- 1 253 963
FR-A- 1 507 450
FR-A- 2 370 222
US-A- 3 720 428

(73) Titulaire : SOCIETE GENERALE POUR LES
TECHNIQUES NOUVELLES S.G.N. Société
anonyme dite:
1, rue des Hérons Montigny-le-Bretonneux
F-78184 Saint-Quentin-en-Yvelines Cédex (FR)

(72) Inventeur : Guilloteau, René
9 rue du Docteur Roux
F-91370 Verrieres le Buisson (FR)
Inventeur : Letoquin, Jacques
3 rue d'Aquitaine
F-92160 Antony (FR)
Inventeur : Voisinet, Christian
23 rue Allviger et Lanot
F-78280 Guyancourt (FR)

(74) Mandataire : Combe, André et al
CABINET BEAU DE LOMENIE 55, rue
d'Amsterdam
F-75008 Paris (FR)

## Description

L'invention concerne un dispositif pour réaliser un raccordement étanche adaptable en longueur et en orientation.

Le problème qui se pose est de réunir de façon étanche deux tuyauteries dont les axes peuvent ne pas être alignés (décalage latéral ou angulaire).

Une solution consiste à utiliser des raccordements flexibles permettant de rattraper les petits défauts d'alignement. Par contre, lorsqu'on se trouve devant des défauts d'alignement importants, ou bien que des impératifs de sécurité ou d'exploitation interdisent l'emploi de flexibles ou de tube ondulés, il faut alors concevoir un raccordement rigide muni de moyens permettant de le mettre en place entre les tuyauteries décalées tout en assurant son étanchéité.

Les tuyauteries n'étant pas distantes l'une de l'autre d'une longueur précisément déterminée, il est nécessaire que le dispositif pour le raccordement rigide puisse s'adapter en longueur.

On a déjà préconisé, pour résoudre des problèmes voisins, d'utiliser des joints coulissants comprenant deux éléments tubulaires capables de coulisser l'un dans l'autre et disposés concentriquement de façon à laisser subsister entre eux un interstice annulaire dans lequel sont disposés des organes destinés à interdire les mouvements axiaux relatifs et à établir l'étanchéité. C'est ce qui est décrit notamment dans FR-A-2 370 222.

Dans la présente invention, on a cherché à avoir un dispositif pouvant être monté et démonté aisément et notamment à l'aide d'un télémanipulateur ou d'un robot. En effet, la commande à distance s'impose dans certaines applications du domaine de l'industrie nucléaire, par exemple le raccordement de tuyauteries dans des cellules où l'intervention humaine est interdite à cause des risques de contamination et/ou d'irradiation.

Le dispositif de raccordement étanche adaptable en longueur et en orientation, de deux tuyauteries dont les extrémités sont distantes l'une de l'autre d'une longueur non précisément déterminée et dont les axes peuvent ne pas être alignés, ledit dispositif utilisant des élément tubulaires capables de coulisser l'un dans l'autre, disposés concentriquement et notamment un tube central dont le diamètre est sensiblement égal au diamètre desdites tuyauteries à raccorder, est caractérisé en ce que :

– chacune desdites tuyauteries est munie, à son extrémité d'une bride d'extrémité présentant une face extrême et une face opposée ayant une portée sphérique, ladite bride étant associée à une contre-bride que l'on peut disposer contre ladite face opposée de la bride et qui comporte une surface sphérique coopérant avec la surface sphérique de ladite face opposée ;

– ledit tube central de longueur légèrement inférieure à la distance séparant les faces extrêmes en regard desdites deux brides d'extrémité, comporte enfilées sur lui-même et tournées chacune vers une de ses extrémités, deux "pièces de poussée" constituées chacune d'un flasque permettant le serrage et d'un tube comportant un évidement dont l'ouverture est tournée vers l'extrémité dudit tube central ; ledit évidement étant destiné à recevoir, de façon étanche, au moins une entretoise ; chacune desdites pièces de poussée permettant par serrage entre son flasque et la contre-bride correspondante l'écrasement d'un joint d'étanchéité entre la surface externe de l'extrémité libre de ladite entretoise et la face extrême de la bride, l'une au moins desdites surfaces ou faces ayant une portée sphérique ; lesdites trois portées sphériques – celle de la face extrême de la bride ou bien de la surface externe de l'extrémité libre de l'entretoise ; celle de la contre-bride ; celle de la face opposée de la bride – étant disposées de façon à avoir un même centre lorsque le dispositif est serré ; l'entretoise de l'une au moins desdites "pièces de poussée" étant formée de deux entretoises dont l'une s'appuie au fond de l'évidement de ladite "pièce de poussée" et dont l'autre sort au-delà de l'extrémité dudit tube central, les extrémités en regard de ces deux entretoises présentant des surfaces en forme de tronc de cône dont les faces sont orientées vers ledit tube central, un joint étant disposé entre les extrémités en regard de ces deux entretoises de façon que ledit joint (29) soit serré entre lesdites extrémités et sur le tube central lors du serrage de ladite "pièce de poussée" avec la contre-bride correspondante.

Dans le dispositif objet de l'invention, l'étanchéité du raccordement est assurée par :

– le joint situé entre la face extrême de la bride et la surface externe de l'extrémité libre de l'entretoise, qui, serré, permet le passage du fluide sans fuite (condition normale d'utilisation) de la tuyauterie au tube central.

Pour assurer une étanchéité convenable lorsque les tuyauteries à raccorder sont décalées, il faut selon l'invention que l'une des surfaces en contact avec ledit joint présente une portée sphérique.

Ladite portée sphérique peut donc se trouver soit sur la face extrême de la bride – son centre est alors situé du côté de la tuyauterie – soit sur la surface externe de l'extrémité libre de l'entretoise – son centre est alors situé du côté du tube central.

Au cas où des fuites se produiraient, du fait par exemple de la fatigue dudit joint, on peut prévoir le montage d'une "lèche-frite" sur la pièce de poussée ou sur la bride qui viendrait se mettre en place au serrage sous ledit joint et permettrait de récupérer les fuites.

De préférence, des joints toriques métalliques montés sur tôle mince sont utilisés.

La tuyauterie et le tube central ne se touchent pas, de sorte que le fluide est alors en contact avec la tuyauterie, la face extrême de la bride, le joint, l'entretoise et le tube central.

Entre l'entretoise et le tube central existe un jeu minimal nécessaire au coulissement de ladite entretoise ; dans cet espace, le fluide peut s'infiltrer.

Il est par conséquent nécessaire de prévoir un second moyen d'étanchéité.

– Lorsque deux entretoises sont placées dans l'évidement, le second moyen d'étanchéité est constitué par un joint placé entre les deux entretoises et s'appuyant également sur le tube central.

Pour améliorer le contact dudit joint, les surfaces des entretoises sur lesquelles il s'appuie ont la forme de tronc de cône dont les surfaces sont orientées vers ledit tube.

De préférence des joints toriques métalliques sont employés.

On a intérêt à choisir pour tous les joints du raccordement des joints nécessitant, pour garantir l'étanchéité, les mêmes forces de serrage.

On doit souligner l'importance du joint situé entre les deux entretoises qui a pour fonction de :

– ne pas gêner le libre coulissement des entretoises par rapport au tube central, lorsque ledit joint n'est pas serré,

– assurer l'étanchéité finale du raccordement lorsqu'il est serré,

– permettre une adaptation des matériaux.

En effet, l'entretoise pouvant sortir au-delà de l'extrémité du tube central, elle est constituée, de préférence, du même matériau que celui du tube central, ou du moins d'un matériau compatible avec le fluide qui viendra en contact lors du raccordement. Il n'est pas nécessaire ou il peut être inadapté d'utiliser un tel matériau pour l'entretoise au contact de la pièce de poussée. La constitution de ce moyen de l'invention (joint entre deux entretoises) permet de choisir des matériaux différents pour chacune des entretoises, matériaux adaptés à l'application désirée.

– Lorsqu'une seule entretoise est insérée dans l'évidement de la pièce de poussée, l'étanchéité entre le tube et l'entretoise est obtenue par exemple au moyen d'une soudure ou bien par un moyen quelconque capable d'assurer l'étanchéité (joint...).

L'adaptation en orientation du raccordement aux tuyauteries a lieu grâce aux moyens suivants de l'invention :

– la portée sphérique de la face extrême de la bride ou de la surface externe de l'extrémité libre de l'entretoise sur laquelle peut se déplacer le joint tout en restant au contact de la bride et de l'entretoise. Avantageusement, ladite portée sphérique est conçue avec un grand rayon,

– la surface sphérique de la contre-bride disposée contre la surface sphérique de la face opposée de la bride, et coopérant avec elle : lors du serrage elles peuvent rotuler l'une par rapport à l'autre de façon que l'axe de symétrie de la surface sphérique de la contre-bride soit ramené dans l'alignement de l'axe du tube central, les centres de la surface sphérique de la contre-bride et de la portée sphérique de la surface extrême de la bride sont alors confondus.

Avantageusement les surfaces sphériques rotulantes de la contrebride et de la face opposée de la bride présentent le même rayon. Au serrage elles ont également un même centre qui est aussi celui de la portée sphérique de la face extrême de la bride ou bien de celle de la surface extrême de l'extrémité libre de l'entretoise.

Pour le rattrapage de petits défauts d'alignement, le rayon de la surface sphérique de la face opposée de la bride peut être très grand, la face opposée pouvant même être plane.

Pour pouvoir rotuler, l'une au moins des pièces supportant une surface sphérique ne doit pas être fixée de façon rigide.

Ainsi la bride étant fixée à la tuyauterie, la contre-bride est placée sur la tuyauterie (ou sur la bride) avec un jeu de sorte qu'au serrage elle forme avec l'axe de la tuyauterie un angle de façon à aligner l'axe de symétrie de sa surface sphérique avec l'axe du tube central. La contre-bride peut également être placée sur le tube de la pièce de poussée et présenter un jeu par rapport à celui-ci.

Diverses formes pour l'évidement de contre-bride sont envisageables : contre-bride avec un alésage, avec une fente...

L'adaptation en longueur du raccordement objet de l'invention se fait sur l'une des extrémités du tube, l'autre ayant été préalablement fixée.

Lors du serrage, sur la dernière extrémité du tube, du flasque de la pièce de poussée contre la contre-bride en regard, l'entretoise glisse le long du tube central et au-delà de l'extrémité dudit tube central pour venir serrer le joint contre la bride. Le tube central est alors prolongé par ladite entretoise, au contact de laquelle sera le fluide.

Dans un mode de réalisation pratique de l'invention, les deux extrémités sont munies chacune de deux entretoises séparées par un joint.

Mais sur l'extrémité du tube central préalablement fixée, il n'est pas nécessaire d'avoir une entretoise qui coulisse par rapport audit tube. On peut par conséquent concevoir une entretoise soudée au tube comportant un épaulement de façon à se placer au serrage dans l'évidement de la pièce de poussée. Dans ce cas, l'adaptation à la longueur a nécessairement lieu au moyen de la pièce de poussée munie des deux entretoises séparées par un joint placée sur l'autre extrémité du tube central.

En ce qui concerne le serrage, divers procédés pourraient être employés, par exemple, un simple serrage avec des clés dynamométriques, mais il ne permet pas de connaître la force effectivement appliquée sur un des joints : les frottements sur les filetages, rondelles... ne sont pas calculables.

L'invention concerne également un procédé de serrage caractérisé en ce que les moyens de serrage sont réalisés de façon à appliquer une force de serrage déterminée sur les joints utilisés.

La valeur de la force de serrage est donnée par la force de compression à appliquer sur le joint pour garantir son étanchéité.

Dans le cas où on a plusieurs joints présentant des forces de compression différentes, il faudra pour assurer l'étanchéité prendre la valeur la plus élevée pour la force de serrage.

Aussi préfère-t-on utiliser des joints nécessitant la même force de compression, et même des joints identiques.

Avantageusement, les moyens de serrage permettant d'appliquer une force de serrage déterminée sur les joints utilisés sont constitués par un système à boulons précontraints.

Ledit système est par exemple l'équipement HYDROCAM de la Société SKF. Le système à boulons précontraints consiste à réunir les éléments à serrer (ici contre-bride et flasque de la pièce de poussée) par des boulons passant dans des trous prévus à cet effet. Une extrémité du boulon est en appui sur l'un des éléments à serrer et, sur l'autre extrémité munie d'un écrou, une force de traction est exercée qui allonge le boulon.

L'écrou est vissé, la force de traction étant maintenue. Le boulon est relâché et reprend sa longueur initiale.

La force de serrage F obtenue connue – qui dépend de l'allongement, du module de Young et des dimensions géométriques du boulon – est intégralement transmise par la pièce de poussée et la (les) entretoise(s) et ne sert qu'à écraser les joints, de sorte que la force de compression exercée sur les joints est égale à la force de serrage connue.

Un tel système à boulons précontraints appliqué au dispositif selon l'invention glissant sans frottement permet d'utiliser les joints dans des conditions optimales et de garantir l'étanchéité.

Un autre moyen de serrage avec une force connue est constitué par un système dit "à genouillère".

Ledit système est constitué d'une bielle et d'une biellette articulées entre elles, la bielle étant également articulée sur une pièce de réaction fixe solidaire de la contre-bride, la biellette étant elle-même articulée sur le flasque de la pièce de poussée mobile qui vient en appui sur une butée placée sur le tube central. Un levier placé sur l'axe d'articulation commun à la biellette et à la bielle permet d'actionner le système.

Entre la pièce de réaction et le flasque sont placés des moyens élastiques permettant le serrage, ce sont par exemple des rondelles dites Belleville ou des ressorts, accompagnés éventuellement de moyens de réglage de la précontrainte sur lesdits moyens élastiques.

L'invention sera mieux comprise à l'aide des figures suivantes montrant différents modes de réalisation de l'invention, mais sans qu'ils apportent une limitation à ladite invention :

– la figure 1 représente un raccordement étanche selon l'invention

– la figure 2 détaille la bride utilisée sur le dispositif de la figure 1

– la figure 3 montre la contre-bride coopérant avec la bride de la figure 1

– la figure 4 est une coupe longitudinale du tube central

– sur la figure 5, la pièce de poussée de la figure 1 est représentée

– sur la figure 6 les extrémités tronconiques des entretoises de la figure 1

– les figures 7 et 8 montrent un joint métallique monté sur tôle support, la figure 7 en coupe et la figure 8 de face

– la figure 9 montre la soudure pour l'étanchéité entre le tube et l'entretoise

– la figure 10 illustre le serrage par le système à boulons précontraints

– la figure 11 montre une contre-bride fendue

– la figure 12 présente un autre mode de réalisation de l'invention avec présence d'une noix appliquée sur la face opposée de la bride

– la figure 13 montre une entretoise formée à partir d'un embout

– sur les figures 14 et 15, on a représenté des variantes avec le centre des portées sphériques placé sur le tube central

– la figure 16 montre le système à genouillère pour le serrage

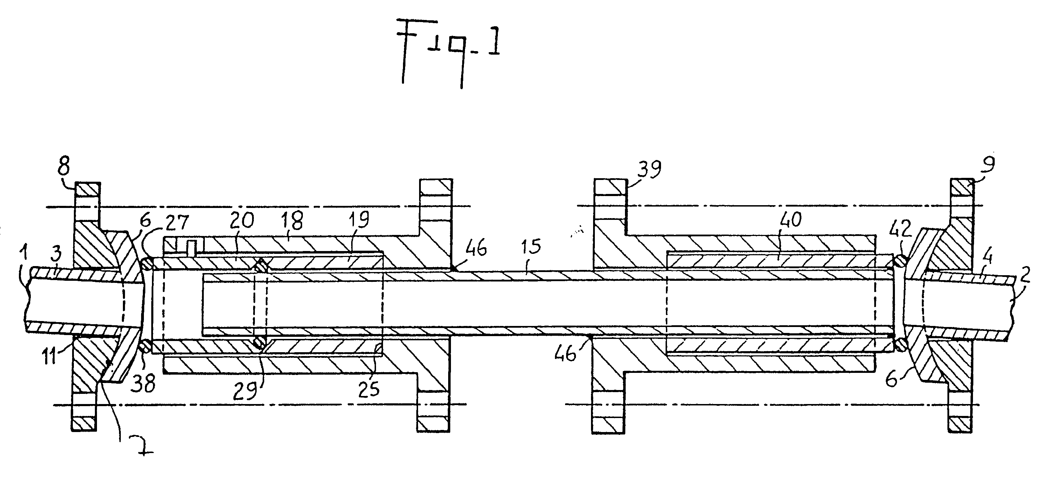

Les deux tuyauteries 1 et 2 à raccorder sont décalées, selon la figure 1.

Sur chaque extrémité desdites tuyauteries, des brides 3 et 4 sont soudées.

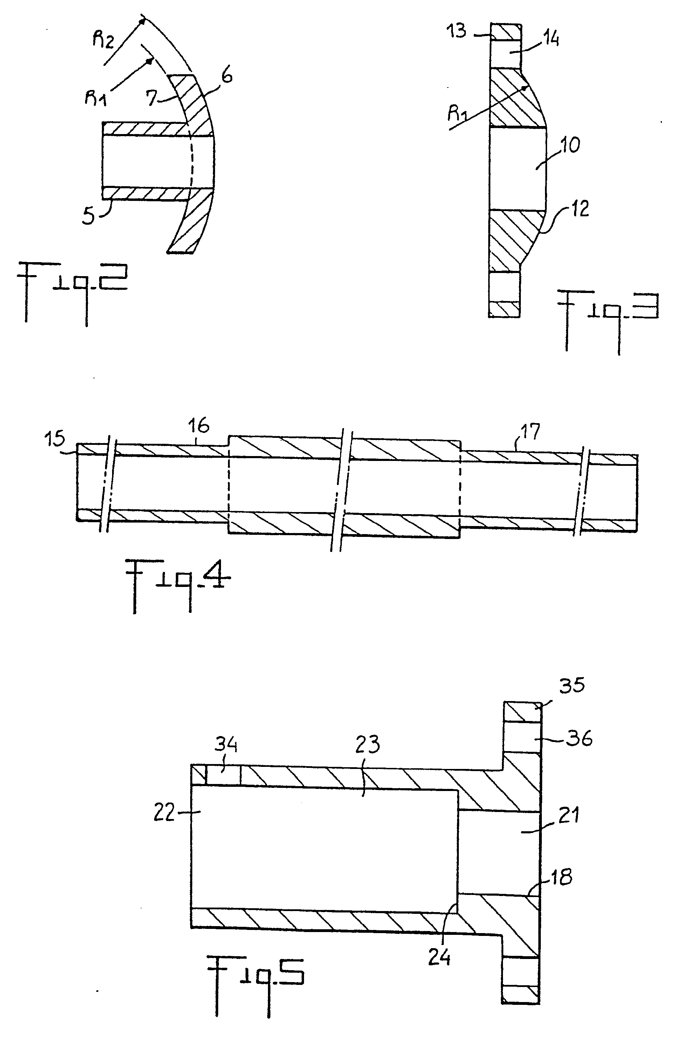

Chaque bride comporte (figure 2) un manchon 5 cylindrique, de diamètre interne sensiblement égal au diamètre externe de la tuyauterie, et s'emboîtant sur ladite tuyauterie. Le manchon est terminé du côté de l'extrémité de la tuyauterie sur la face extrême de la bride par une portée sphérique 6, située en avant de l'extrémité de la tuyauterie. Cette portée sphérique 6 terminant la bride a un centre O, situé selon la figure 2 sur l'axe de la tuyauterie, et a un rayon R2 grand pour avoir une courbure faible. Le dessin exagère la courbure pour mieux faire comprendre le dispositif et son fonctionnement. Le centre pourrait dans une autre disposition être situé sur une ligne virtuelle prolongeant l'axe de la tuyauterie vers l'extérieur.

Selon le mode de réalisation représenté figures 1 et 2, les brides 3 et 4 comportent également sur leur face opposée une surface sphérique 7 de centre O et de rayon R1 inférieur à R2.

De préférence, on choisit pour les brides le même matériau que celui des tuyauteries puisqu'elles seront au contact du fluide.

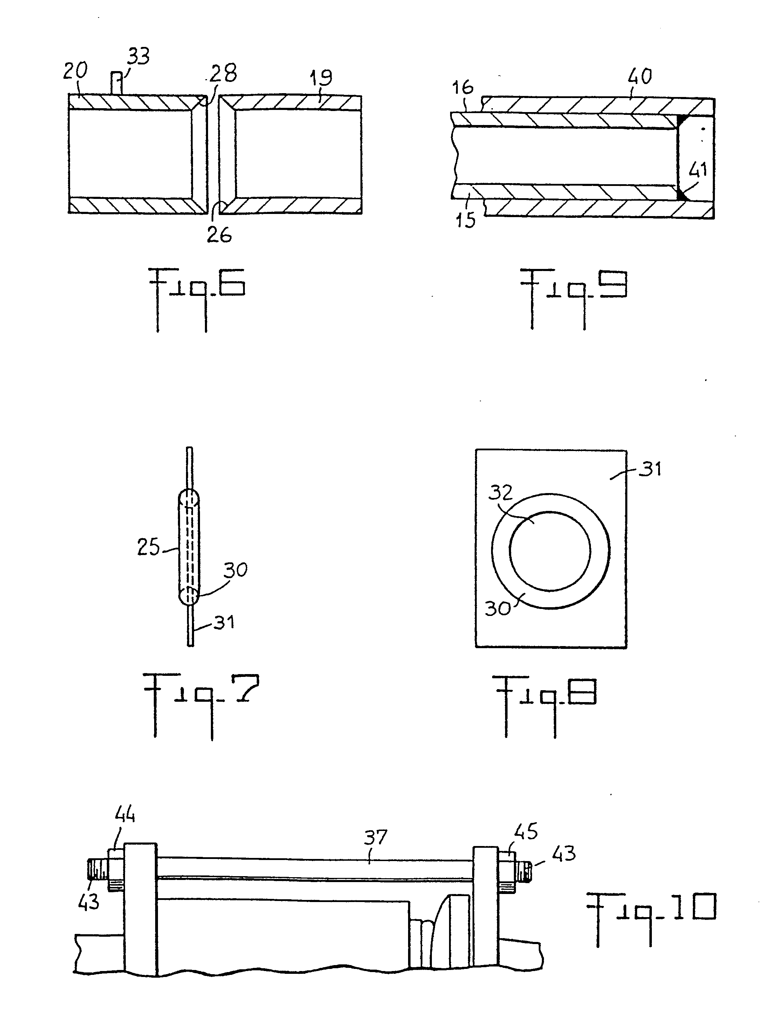

Chaque extrémité de tuyauterie est munie également d'une contre-bride 8, 9. La figure 3 montre une contre-bride qui est glissée sur le manchon 5 de la bride avant la fixation de ladite bride et qui présente un alésage 10 de diamètre supérieur à celui du manchon 5 de la bride sur laquelle elle glisse. Entre le manchon 5 et la contre-bride, un jeu 11 existe, ce jeu pouvant être de l'ordre d'une dizaine de millimètres.

La contre-bride possède également une surface sphérique 12 en regard de la portée sphérique 7 de la bride, ces deux portées ayant le même rayon R1.

Enfin, une autre partie en forme de disque 13 percée de trous 14 permet la liaison de la contre-bride avec la pièce de poussée en regard.

Un tube 15 constituant le tube central du raccordement est coupé à une longueur approximativement égale à la distance entre les deux portées sphériques 6 des brides 3 et 4. Il est raisonnable de tolérer un écart allant jusqu'à 2 cm.

Le matériau constituant le tube 15 est compatible avec le fluide, on choisit de préférence le même matériau.

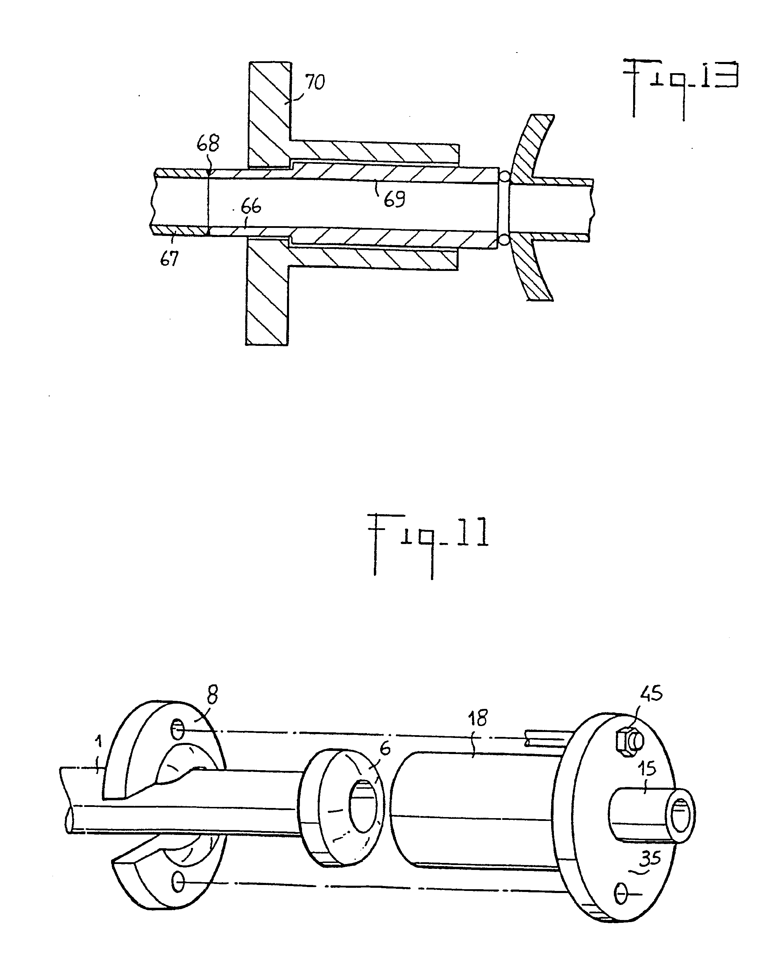

Ainsi que le montre la figure 4, le tube 15 est rectifié à chacune de ses extrémités sur une longueur au moins égale à la longueur de la pièce de poussée pour faciliter le glissement de la pièce de poussée et surtout pour permettre une bonne étanchéité sur les surfaces 16 et 17 rectifiées.

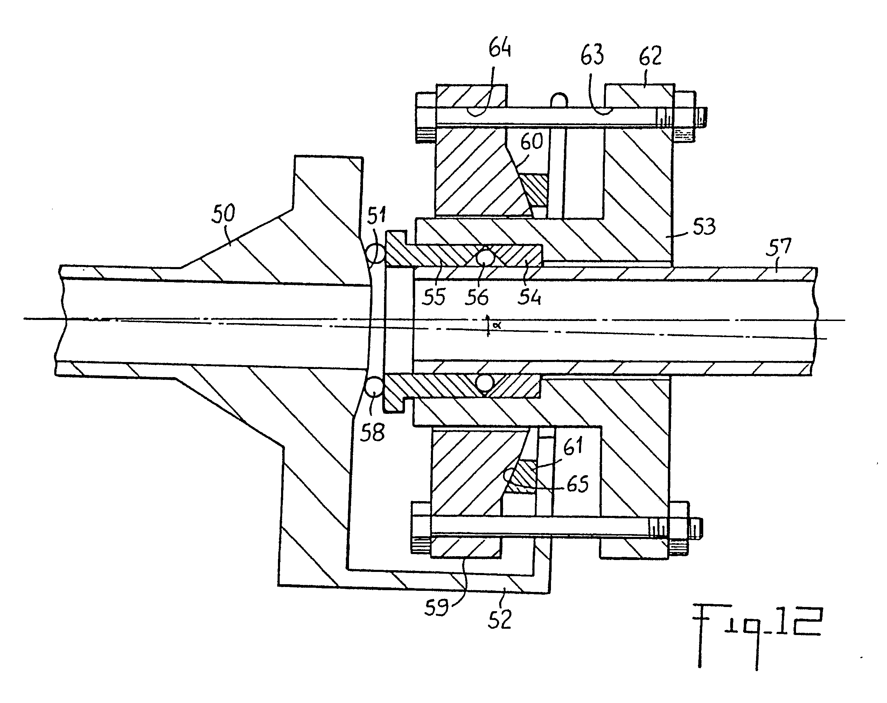

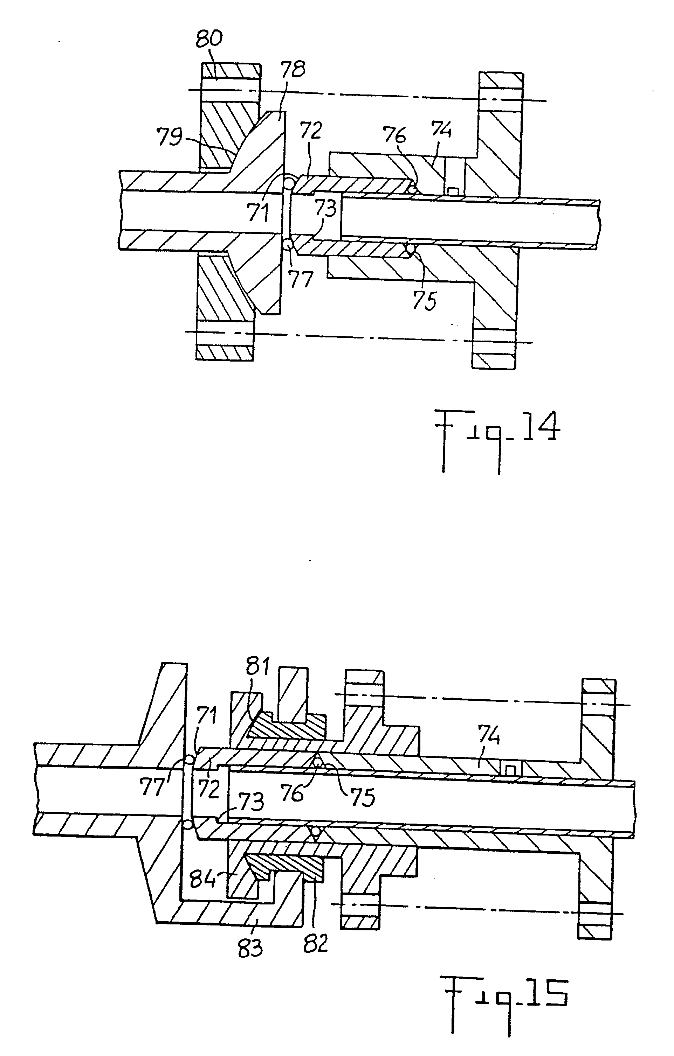

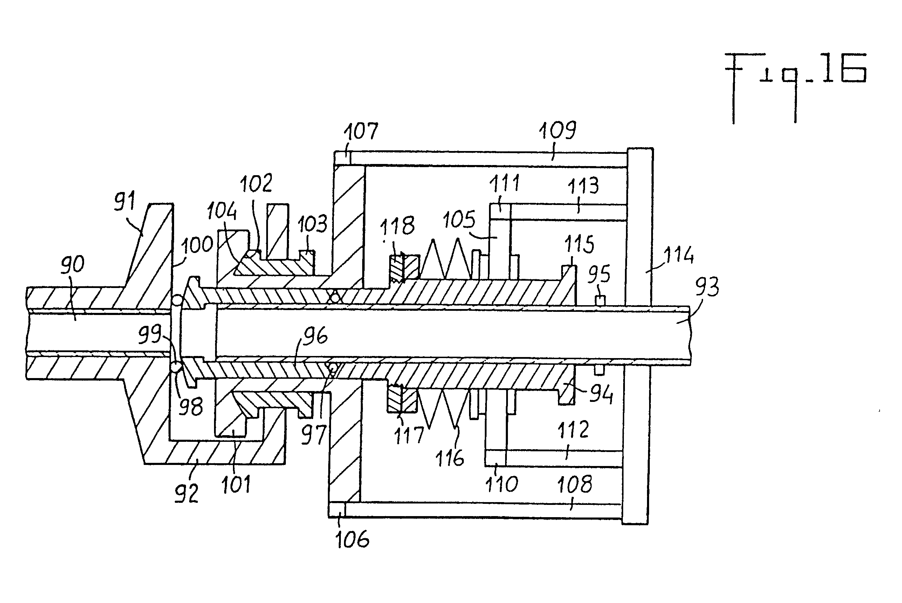

Chaque extrémité du tube 15 est munie selon la figure 1 d'une pièce de poussée (18, 39) montrée plus en détail figure 5 ; l'extrémité gauche comporte également deux entretoises 19 et 20 représentées en détail sur la figure 6 ; l'extrémité droite une seule entretoise représentée figure 9.

La pièce de poussée (18 ou 39) comporte un tube ayant un alésage 21 de diamètre juste supérieur au diamètre du tube 15 rectifié de façon à pouvoir glisser sans frottement par l'intermédiaire de la surface interne ainsi délimitée sur la surface rectifiée 16 du tube central 15.

Dans ledit tube de la pièce de poussée, un évidement 23 est créé par un alésage 22 de diamètre supérieur à celui de l'alésage 21.

Chacune des pièces de poussée (18, 39) est disposée sur le tube 15 de façon que l'ouverture de l'évidement soit tournée vers l'extrémité du tube 15.

Selon la figure 1, sont glissées jusqu'au fond 24 de l'évidement 23 de la pièce de poussée les entretoises (19 et 20) ou 40.

Lesdites entretoises sont constituées par des cylindres ayant un diamètre interne juste supérieur au diamètre du tube rectifié, et un diamètre externe juste inférieur à celui de l'alésage 22 de façon à pouvoir glisser sans frottement tout en présentant un minimum de jeu. Sont représentées sur l'extrémité gauche du tube de la figure 1 les entretoises 19 et 20 séparées par le joint 29.

L'entretoise 19 s'appuie sur le fond 24 de l'évidement de la pièce de poussée avec sa surface 25, son autre extrémité est constituée d'une surface en forme de tronc de cône 26 dont la face est orientée vers le tube 15 (figure 6).

L'autre entretoise 20 présente une extrémité libre 27 en regard de la portée sphérique de la face extrême de la bride, son autre extrémité 28 a également une forme de tronc de cône avec sa face orientée vers le tube 15.

Entre les extrémités 26 et 28 est placé un joint 29 également au contact de la surface rectifiée 16 du tube 15.

L'entretoise 20 est munie d'un ergot 33 se plaçant dans une lumière 34 formée par évidement sur le tube de la pièce de poussée 18 perpendiculairement à son axe. Cet ergot a pour fonction de tenir entre elles la pièce de poussée 18 et les entretoises 19 et 20 lors de la mise en place. Le diamètre de ladite lumière permet le libre coulissement de l'entretoise 20 pour l'adaptation en longueur.

Les matériaux constituant les entretoises sont avantageusement choisis de la façon suivante : le matériau de l'entretoise 19 est le même que celui de la pièce de poussée 18 et celui de l'entretoise 20 est identique à celui du tube 15.

La pièce de poussée 18 comporte également un flasque 35 percé de trous 36 dans lesquels seront mis en place les moyens de serrage 37. Lesdits moyens réunissent la pièce de poussée 18 ou 39 à la contre-bride 8 ou 9 respectivement.

Entre la portée sphérique 6 de la bride 8 et l'extrémité 27 de l'entretoise 20 est placé un joint 38. De préférence un joint métallique monté sur tôle mince est utilisé.

Il est représenté figures 7 et 8. Ce joint 38 comporte un anneau 30 monté sur une tôle mince 31 présentant un alésage central 32.

Avantageusement, les joints 29 et 38 présentent les mêmes forces de serrage pour garantir l'étanchéité.

Pour l'extrémité droite, figure 1, un moyen simplifié a été monté. Il est constitué d'une pièce de poussée 39 identique à la pièce de poussée 18 et dans l'évidement de laquelle vient se loger une entretoise 40 unique s'appuyant sur le fond 24 de l'évidement de la pièce de la poussée 39.

L'étanchéité est assurée par une soudure 41 (figure 9) sur l'extrémité rectifiée 16 du tube 15 et par un joint 42 placé entre la portée sphérique 6 de la bride et l'entretoise 40.

Les moyens de serrage 37 (figure 10) réunissant chaque pièce de poussée et chaque contre-bride sont constitués de boulons 43 placés dans les trous 36 des flasques 35 des pièces de poussée et les trous 14 des contre-brides, et d'écrous 44 et 45 vissés à chaque extrémité libre de chaque boulon.

La mise en place du raccordement a lieu de la façon suivante.

Dans un premier temps, sur chaque tuyauterie, sont montées les contre-brides 8 et 9 puis sont soudées les brides 3 et 4 auxdites tuyauteries.

Un tube est coupé à la longueur désirée (un peu inférieure à la distance entre les brides) et est rectifié à ses extrémités sur une longueur au moins égale à celle de la pièce de poussée.

Une pièce de poussée est enfilée sur une extrémité du tube et est éventuellement fixée par un léger point de soudure 46 entre ladite pièce et ledit tube pour faciliter la mise en place.

L'entretoise unique 40 est glissée dans son évidement mais de façon qu'elle dépasse l'extrémité du tube, elle est soudée ensuite sur l'extrémité dudit tube (point de soudure 41), on forme ainsi l'extrémité droite du tube de la figure 1. Le joint 42 est amené et l'ensemble est placé de façon à amener l'entretoise 40 contre le joint 42.

Les boulons 43 munis d'un écrou 44 sur l'une des extrémités sont passés dans les trous de la contre-bride et de la pièce de poussée mis en vis-à-vis. Les surfaces sphériques de la contre-bride et de la face opposée de la bride sont en contact. La contrebride, grâce à son jeu, se place de façon que l'axe de symétrie de sa surface sphérique s'aligne sur celui du tube central. Sa surface sphérique se déplace simultanément contre celle de la face opposée de la bride. Sur l'autre extrémité libre des boulons, on exerce une force de traction qui tend chaque boulon, à l'aide par exemple du dispositif HYDROCAM de SKF. Equipement, de n mm. L'écrou 45 est alors vissé sur le boulon, la force de traction étant maintenue puis le boulon est relâché qui reprend sa longueur initiale. Les pièces sont serrées et la force de serrage écrase les joints.

Avec des joints toriques métalliques, tels les joints CEFILAC, l'étanchéité est garantie sous une force de compression de (donc une force de traction d'au moins) 150 kg/cm linéaire de joint.

L'extrémité droite du tube étant ainsi fixée, l'autre extrémité du tube est préparée : la pièce de poussée 18 est glissée, puis maintenue par une soudure légère 46 sur le tube 15, ladite soudure étant destinée à être rompue lors de la mise en place du tube, la première entretoise 19 est glissée jusqu'au fond de l'évidement de la pièce de poussée, le joint est glissé ensuite avec l'autre entretoise 20.

Le joint 38 est amené et la pièce de poussée 18 est poussée, entraînant le glissement des entretoises 19, 20 jusqu'à ce que l'entretoise 20 appuie ce joint contre la portée sphérique 6 de la face extrême de la bride 3. L'entretoise 20 prolonge alors le tube central jusqu'à la bride dans laquelle s'écoule le fluide, le joint assurant l'étanchéité. De la même façon que précédemment, le serrage de la pièce de poussée avec la contre-bride est effectué.

Les figures 11, 12, 13 présentent des variantes du dispositif objet de l'invention.

La figure 11 représente un autre type de contre-bride : elle est fendue et se met en place lors du serrage seulement.

Sur la figure 12, on a représenté un autre mode de réalisation de l'invention, une seule extrémité du raccordement avec moyen d'adaptation à la longueur est reportée.

Dans cette disposition, la bride comprend un manchon 50 fixé à la tuyauterie et une portée sphérique 51 de rayon R2 et dont le centre est sur l'axe de la tuyauterie. Elle comporte également une goulotte 52 ouverte vers le haut dans laquelle vient se loger le raccordement.

Il comporte, de même que dans le mode de réalisation précédent, une pièce de poussée 53 avec un évidement dans lequel sont placées deux entretoises 54 et 55 à surface en forme de tronc de cône tournées vers le tube 57 sur lesquelles s'appuie un joint 56 également en contact avec le tube central 57.

L'entretoise 55 comprime un joint 58 contre la portée sphérique 51 de la face extrême de la bride pour assurer une étanchéité.

Le serrage a lieu entre le flasque 62 de la pièce de poussée 53 et une contre-bride 59 portée par la pièce de poussée elle-même. Cette contre-bride est située près de l'extrémité du tube et présente par rapport au tube de ladite pièce de poussée un jeu. La contre-bride 59 possède une surface sphérique 60 de rayon R1 et de même convexité que la portée sphérique 51.

Une noix 61 est placée sur la goulotte en regard de la portée sphérique 51, elle possède une surface sphérique 65 de rayon R1 de même convexité que les autres portée et surface sphériques et elle permet le passage de la pièce de poussée.

La surface sphérique 65 constitue ainsi la surface sphérique de la face opposée de la bride.

Dans des trous 63 et 64 de respectivement le flasque de la pièce de poussée et la contre-bride, des boulons sont passés pour assurer le serrage à l'aide d'un système à boulons précontraints.

Lors du serrage, les surfaces sphériques de même rayon de la noix et la contre-bride s'appliquent l'une contre l'autre, leurs centres se confondent alors sur le centre O de la portée sphérique 51 de la bride.

L'adaptation en longueur et l'étanchéité sont assurées de la même manière que dans le mode de réalisation précédent.

La figure 13 montre un autre mode de réalisation préféré pour l'extrémité droite du tube (l'extrémité fixée en premier lieu) dans lequel un embout 66 est fixé sur le tube central 67 au moyen d'une soudure 68.

Cet embout de même diamètre que celui du tube central présente un épaulement 69 formant entretoise et s'insérant dans l'évidement 23 de la pièce de poussée lors du serrage.

Dans ce cas, évidemment, le tube est coupé à une longueur légèrement inférieure à la distance entre les brides diminuées de la longueur de l'embout soudé.

La mise en place consiste à glisser d'abord la pièce de poussée 70 sur le tube 67 puis souder l'embout 66, les opérations ultérieures étant effectuées de la même façon que précédemment.

Pour le démontage, il suffit de dévisser les écrous, retirer les boulons et séparer les pièces.

Sur les figures 14 et 15, le même mode de serrage est repris avec, sur la figure 14, une contre-bride placée sur la tuyauterie, alors que sur la figure 15 elle est située sur le tube central et avec une bride à goulotte.

Ces variantes montrent plus précisément que le joint 77 placé entre la bride et le tube central est au contact d'une portée sphérique 71 située sur l'extrémité libre de l'entretoise 72. Dans le mode de réalisation préféré montré sur ces figures, le diamètre de l'extrémité libre de l'entretoise 72 est égal à celui de la tuyauterie, l'entretoise 72 comporte alors un épaulement 73.

Sur ces figures, la pièce de poussée 74 présente dans le fond de son évidement une surface en forme de tronc de cône 75 sur laquelle vient en appui le joint 76 : la pièce de poussée joue alors le rôle de la seconde entretoise.

La portée sphérique au contact du joint 77 ayant son centre du côté du tube central, les portées sphériques de la face opposée de la bride et de la contre-bride sont orientées de façon à présenter leur centre du même côté.

La figure 14 montre la bride 78 et sa portée sphérique 79 placée sur sa face opposée qui coopère avec la portée sphérique de la contre-bride 80 placée sur la tuyauterie.

Sur la figure 15, la face opposée 81 avec portée sphérique est constituée par une noix 82 venant buter contre la goulotte 83 de la bride, ladite portée sphérique coopère avec celle de la contre-bride 84.

La figure 16 présente le système de serrage dit "à genouillère".

Sur la tuyauterie 90 une bride 91 est fixée qui comporte une goulotte 92. Sur le tube central 93, sont montés un support 94 venant en appui sur une butée 95 solidaire du tube et une ou deux entretoises 96. Sur le schéma une seule entretoise 96 est introduite, le support servant de 2e entretoise. On aurait pu tout aussi bien placer une autre entretoise dans un évidement du support.

Entre le support et l'entretoise dont les surfaces en vis-à-vis ont une forme tronconique, un joint d'étanchéité 97 est placé.

La surface de l'extrémité libre de l'entretoise a une portée sphérique 98 qui vient au contact du joint 99 s'appuyant sur la surface plane de la face extrême 100 de la bride 91.

Une contre-bride 101 munie d'une portée sphérique 102 rotule sur une noix 103 qui, par sa portée sphérique 104, constitue la face opposée de la bride. Cette disposition est très proche de celle de la figure 12.

Lors du serrage, la noix est en appui contre la goulotte et est serrée par la contre-bride.

Pour le serrage, la contre-bride constitue une surface fixe sur laquelle la pièce de poussée ou le flasque 105 est serré. Sur les points 106, 107 de la surface dite fixe, s'articulent deux bras 108 et 109 constituant le système bielle. Sur les points 110, 111 de la surface dite mobile de la pièce de poussée, s'articulent les bras 112 et 113 constituent le système biellette.

Les autres extrémités de ces bras sont reliées à un axe commun 114 muni d'un levier venant buter contre le tube central.

A l'état desserrée, la pièce de poussée peut être déplacée jusqu'à une butée 115 placée sur le support.

Sur le support sont également montés entre les surfaces fixe et mobile des moyens élastiques pour assurer le serrage. Ce peuvent être des rondelles Belleville ou en général des ressorts, une précontrainte peut être obtenue. Sur la figure 16, deux rondelles Belleville 116 ont été schématisées, ainsi que des moyens de réglage 117 de la contrainte.

Pour le serrage, le levier est abaissé vers le tube central. Se faisant, l'axe commun 114 se déplace entraînant en mouvement le bras des systèmes bielle et biellette. La pièce de poussée mobile 105 se déplace alors vers la pièce d'extrémité 118 du support dont elle est solidaire comprimant ainsi les moyens élastiques.

La poussée est transmise donc au support par la pièce 118, au joint 97, à l'entretoise 96 et au joint 99 par la portée 98.

Les axes des systèmes bielle et biellette tendent à se placer parallèlement puis à dépasser cette position d'équilibre, assurant ainsi un verrouillage lorsque le levier vient buter sur le tube central.

La description précédente a montré que la mise en place d'un raccordement selon l'invention était aisée.

Il suffit d'avoir les "pièces détachées" et de monter le raccordement par emboîtement et glissement des pièces sur un tube coupé sur place à la longueur choisie, avec éventuellement selon les cas quelques points de soudure.

Lors de la mise en place sur les tuyauteries, à la dernière extrémité à serrer, les pièces s'adaptent automatiquement à la longueur.

Le déplacement du joint entre la bride et l'entretoise sur une portée sphérique et le déplacement de la surface sphérique de la contre-bride contre une autre surface sphérique de la bride permettent l'adaptation au décalage entre tuyauteries et par conséquent aux déplacements dus à des dilatations thermiques.

Le serrage ne présente également pas de difficultés particulières, le procédé de serrage selon l'invention permet de rester maître des forces de compression appliquées sur les joints.

La conception simple du dispositif selon l'invention, sa facilité de mise en place et donc aussi de démontage sont des avantages permettant la télémanipulation du dispositif, donc son application aux interventions nucléaires en cellules.

## Revendications

1. Dispositif de raccordement étanche, adaptable en longueur et en orientation, de deux tuyauteries dont les extrémités sont distantes l'une de l'autre d'une longueur non précisément déterminée et dont les axes peuvent ne pas être alignés, ledit dispositif utilisant des éléments tubulaires capables de coulisser l'un dans l'autre, disposés concentriquement et notamment un tube central (15) dont le diamètre est sensiblement égal au diamètre desdites tuyauteries à raccorder, caractérisé en ce que :

a) chacune desdites tuyauteries est munie, à son extrémité d'une bride (3, 4) d'extrémité présentant une face extrême (6) et une face opposée (7) ayant une portée sphérique, ladite bride (3,4) étant associée à une contre-bride (8, 9) que l'on peut disposer contre ladite face opposée (7) de la bride (3, 4) et qui comporte une surface sphérique coopérant avec la surface sphérique de ladite face opposée (7) ;

b) ledit tube central (15) de longueur légèrement inférieure à la distance séparant les faces extrêmes en regard desdites deux brides d'extrémité (3, 4), comporte enfilées sur lui-même et tournées chacune vers une de ses extrémités, deux "pièces de poussée" (18, 39) constituées chacune d'un flasque (35) permettant le serrage et d'un tube comportant un évidement (23) dont l'ouverture est tournée vers l'extrémité dudit tube central (15) ; ledit évidement (23) étant destiné à recevoir, de façon étanche, au moins une entretoise (19, 20, 40) ; chacune desdites pièces de poussée (18, 39) permettant par serrage entre son flasque (35) et la contre-bride correspondante (8, 9) l'écrasement d'un joint d'étanchéité (38, 42) entre la surface externe de l'extrémité libre de ladite entretoise (20, 40) et la face extrême (6) de la bride (3, 4), l'une au moins desdites surfaces ou faces ayant une portée sphérique ; lesdites trois portées sphériques – celle de la face extrême (6) de la bride (3, 4) ou bien de la surface externe de l'extrémité libre de l'entretoise (98), celle de la contre-bride (8, 9), celle de la face opposée (7) de la bride (3, 4) – étant disposées de façon à avoir un même centre lorsque le dispositif est serré ; l'entretoise de l'une au moins desdites "pièces de poussée" (18) étant formée de deux entretoises (19, 20) dont l'une (19) s'appuie au fond de l'évidement (23) de ladite "pièce de poussée" (18) et dont l'autre (20) sort au-delà de l'extrémité dudit tube central (15), les extrémités en regard de ces deux entretoises (19, 20) présentant des surfaces en forme de tronc de cône dont les faces sont orientées vers ledit tube central (15), un joint (29) étant disposé entre les extrémités en regard de ces deux entretoises (19, 20) de façon que ledit joint (29) soit serré entre lesdites extrémités et sur le tube central (15) lors du serrage de ladite "pièce de poussée" (18) avec la contre-bride (8) correspondante.

2. Dispositif selon la revendication 1, caractérisé en ce que chacune des pièces de poussée (18, 39) comporte deux entretoises (19 et 20) séparées par un joint (29).

3. Dispositif selon la revendication 1, caractérisé en ce que l'on utilise des joints toriques métalliques.

## Ansprüche

1. Längen- und richtungsanpassungsfähige Vorrichtung zum dichten Verbinden zweier Rohrleitungen, deren Enden um eine nicht genau bestimmte Länge voneinander entfernt sind und deren Achsen nichtfluchtend sein können, bei welcher Vorrichtung konzentrisch angeordnete und ineinander gleitfähige rohrförmige Elemente verwendet werden, insbesondere ein zentrales Rohr (15), dessen Durchmesser im wesentlichen gleich dem Durchmesser der zu verbindenden Rohrleitungen ist, dadurch gekennzeichnet, daß

a) jede der Rohrleitungen an ihrem Ende mit einem Endflansch (3, 4) versehen ist, der eine Endfläche (6) und eine entgegengesetzte Fläche (7) mit Kugelausladung aufweist, welcher Flansch (3, 4) mit einem Gegenflansch (8, 9) kombiniert ist, der an die entgegengesetzte Fläche (7) des Flansches (3, 4) angelegt werden kann und eine mit der Kugeloberfläche der entgegengesetzten Fläche (7) zusammenwirkende Kugeloberfläche aufweist ;

b) das zentrale Rohr (15) von einer etwas geringeren Länge als der die zueinanderschauenden Endflächen der beiden Endflansche (3, 4) trennende Abstand, über sich gefädelt und jeweils zu einem ihrer Enden gerichtet, zwei "Druckstücke" (18, 39) umfaßt, die jeweils durch einen das Festklemmen ermöglichenden Flansch (35) und ein Rohr mit einem Hohlraum (23) gebildet sind, dessen Öffnung zum Ende des zentralen Rohres (15) gewendet ist und welcher Hohlraum (23) zur dichten Aufnahme von mindestens einem Distanzrohr (19, 20, 40) bestimmt ist ; wobei jedes der Druckstücke (18, 39) durch Zusammendrücken zwischen seinem Flansch (35) und dem entsprechenden Gegenflansch (8, 9) die Quetschung eines Dichtungsorgans (38, 42) zwischen der äußeren Oberfläche des freien Endes des Distanzrohres (20, 40) und der Endfläche (6) des Flansches (3, 4) gestattet und mindestens eine dieser Oberflächen oder Flächen eine Kugelausladung aufweist ; wobei die drei Kugelausladungen – jene der Endfläche (6) des Flansches (3, 4) oder auch der äußeren Oberfläche des freien Endes des Distanzrohres (98), jene des Gegenflansches (8, 9), jene der entgegengesetzten Fläche (7) des Flansches (3, 4) – so angeordnet sind, daß sie bei festgeklemmter Vorrichtung denselben Mittelpunkt haben ; wobei das Distanzrohr von zumindest einem der "Druckstücke" (18) durch zwei Distanzrohre (19, 20) gebildet ist, von denen das eine (19) sich am Boden des Hohlraums (23) des "Druckstücks" (18) abstützt und das andere (20) über das Ende des zentralen Rohres (15) hinausgeht, wobei die zueinanderschauenden Enden dieser beiden Distanzrohre (19, 20) kegelstumpfförmige Oberflächen aufweisen, deren Flächen zum zentralen Rohr (15) gerichtet sind, und eine Dichtung (29) zwischen den zueinanderschauenden Enden dieser beiden Distanzrohre (19, 20) so angeordnet ist, daß die Dichtung (29) beim Festklemmen des "Druckstücks" (18) mit dem entsprechenden Gegenflansch (8) zwischen diesen Enden und über dem zentralen Rohr (15) zusammengedrückt wird.

2. Vorrichtung nach Anspruch 1, dadurch gekennzeichnet, daß jedes der Druckstücke (18, 39) zwei durch eine Dichtung (29) voneinander getrennte Distanzrohre (19 und 20) aufweist.

3. Vorrichtung nach Anspruch 1, dadurch gekennzeichnet, daß O-Ring-Dichtungen aus Metall verwendet werden.

**Claims**

1. Device for sealed connection, adaptable in length and in orientation, of two pipes whose ends are at a distance apart by a length which is not precisely determined and whose axes need not be aligned, said device using tubular elements slidable one inside the other, placed concentrically and in particular a central tube (15) whose diameter is substantially equal to the diameter of the pipes to be connected, characterized in that :

a) each of said pipes is provided, at its end, with an end flange (3, 4) having an end face (6) and an opposite face (7), with a spherical bearing surface, said flange (3, 4) being associated to a backing flange (8, 9) which can be placed against said opposite face (7) of the flange (3, 4) and which comprises a spherical surface which cooperates with the spherical surface of said opposite face (7) ;
b) said central tube (15) of length slightly less than the distance between the end faces in facing relationship of said two end flanges (3, 4), comprises, threaded over it and each facing one of its ends thereof, two thrust members (18, 39) constituted by a flange (35) for clamping purposes and by a tube including a void (23) whose opening is directed towards the end of said central tube (15) ; said void (23) being intended to receive in sealed manner, at least one spacer (19, 20, 40) ; each of said thrust members (18, 39) enabling by clamping between its flange (35) and the corresponding backing flange (8, 9) a sealing ring (38, 42) to be crushed between the outside surface of the free end of said spacer (20, 40) and the end face (6) of the flange (3, 4) ; at least one of said surfaces or faces having a spherical bearing surface ; said three spherical bearing surfaces – that of the end face (6) of the flange (3, 4) or that of the outer surface of the free end of the spacer (98), that of the backing flange (8, 9), that of the opposite face (7) of the flange (3, 4) – being disposed in such a manner as to have the same center when the device is clamped ; the spacer of at least one of said "thrust members" (18) being constituted by two spacers (19, 20) one of which (19) comes into abutment against the end of the void (23) in said "thrust member" (18) and the other (20) of which projects beyond the end of said central tube (15), with the facing ends of said two spacers (19, 20) having frustoconically-shaped surfaces whose faces face towards said central tube (15), a sealing ring (29) being disposed between the facing ends of these two spacers (19, 20) in such a manner that said sealing ring (29) is clamped between said ends and against the central tube (15) when said "thrust member" (18) is clamped to the corresponding backing flange (8).

2. Device according to claim 1, characterized in that each of the thrust members (18, 39) includes two spacers (19 and 20) separated by a sealing ring (29).

3. Device according to claim 1, characterized in that metal sealing rings are used.

Fig-1

Fig.2

Fig.3

Fig.4

Fig.5

Fig.6

Fig.9

Fig.7

Fig.8

Fig.10

Fig.13

68

70

66

69

67

Fig.11

8

1

18

45

6

15

35

Fig.12

EP 0 259 209 B1

**Fig. 14**

**Fig. 15**

Fig.16

EP 0 259 209 B1